# EUROPEAN PATENT APPLICATION

(11) **EP 2 806 392 A1**
(43) Date of publication of application: **26.11.2014**
(21) Application number: 13738231.3
(22) Date of filing: 18.01.2013
(51) Int. Cl.: G06Q 30/06

(54) **INFORMATION PROCESSING METHOD AND SYSTEM FOR NETWORK TRADING PLATFORM**

(30) Priority: 20.01.2012 CN 201210019291
(71) Applicant: eFuture (Beijing) Royalstone Information Technology Inc., Beijing 100026 (CN)
(72) Inventor: YAN, Yanchun, Beijing 100026 (CN)
(74) Representative: Wächter, Jochen
(86) International application number: PCT/CN2013/070665
(87) International publication number: WO 2013/107376

(57) **Abstract**

The present invention provides an information processing method for a network transaction platform that is provided with personal consumption space of a user and that has a product information database, the method comprising: an information publishing step of publishing and residing in personal consumption space subscription information that is published by a user; an extracting step of extracting the subscription information from the personal consumption space; a matching step of matching the subscription information to product information in the product information database; and a feedback step of feeding back to the personal consumption space product information in the product information database whose matching degree to the subscription information reaches a certain predefined threshold. The present invention further discloses an information processing system for a network transaction platform. The information processing system and method for a network transaction platform as disclosed in the present invention has such advantages that users operate conveniently and rapidly and that service providers provide feedback in time and accurately.

## Description

### BACKGROUND

The present invention relates to an information processing method and system for a network transaction platform, and more specifically, to a network transaction information processing method and system of using a network transaction platform to implement the establishment of personal consumption space.

In existing network transaction systems, a typical network transaction mode is that a user searches an e-business website, then chooses a product from the commodity search result to form an order, and finally completes the network transaction by online banking or other payment method. That is, the order is formed after the user carries out a search.

Such a traditional network transaction mode is a typical "people looking for goods" shopping style; when a user has some personal demand, he/she has to do a lot of product search and collection on different types or different interfaces of websites of each level of business (supplier, agent, etc.). Next, the user has to analyze relevant information prior to forming an order finally. In this course, since product information comes from different sources, the formats and contents are not uniform; if the user expects to get an optimal result that best meets his/her personal demand, he/she has to devote a large amount of time and energy to compare and analyze the product information. On the other hand, after an order is formed at the user side, the order is transferred to the chosen product supplier, and the product supplier delivers goods according to the order; even though the product supplier sells products, he has no idea of original demand data on some products of all users who have had a deal with him, not to mention analyze the quantity demanded for some product or be fully certain about the reserve supply.

### SUMMARY

To eliminate the above drawbacks in the prior art, the present invention proposes an information processing method for a network transaction platform that is provided with personal consumption space of a user and that has a product information database, the method comprising:
an information publishing step of publishing and residing in personal consumption space subscription information that is published by a user;
an extracting step of extracting the subscription information from the personal consumption space;
a matching step of matching the subscription information to product information in the product information database; and
a feedback step of feeding back to the personal consumption space product information in the product information database whose matching degree to the subscription information reaches a certain predefined threshold.

According to one preferred embodiment of the present invention, the information processing method further comprises: an order generating step of generating an order according to the feedback product information.

According to another preferred embodiment of the present invention, the information processing method further comprises: an order handling step of receiving the generated order and handling the order or forwarding it to a third party.

According to another preferred embodiment of the present invention, the information processing method further comprises: an information editing step of editing the subscription information and/or matching information in the personal consumption space.

According to another preferred embodiment of the present invention, the matching step in the information processing method comprises: subjecting the subscription information to one or more of character matching, text matching, graphic matching, interpretation matching or fuzzy matching with the product information.

According to another preferred embodiment of the present invention, the information editing step in the information processing method comprises: modifying, forwarding or removing the subscription information; and/or bookmarking, forwarding or removing the matching information.

According to another preferred embodiment of the present invention, the information processing method further comprises: an information editing step of editing the subscription information and/or feedback product information in the personal consumption space.

According to another preferred embodiment of the present invention, the matching step in the information processing method comprises: subjecting the subscription information to character matching, text matching, graphic matching, interpretation matching or fuzzy matching with the product information.

According to another preferred embodiment of the present invention, the information editing step in the information processing method comprises: modifying, forwarding or removing the subscription information; and/or bookmarking, forwarding or removing the feedback product information.

According to another preferred embodiment of the present invention, the information publishing step, extracting step, matching step, feedback step, order generating step, order handling step, information editing step in the method embodiment are performed in real time or at regular time.

According to another preferred embodiment of the present invention, the subscription information in the information processing method is personal demand information, which includes one or more of: category, name, feature, brand, price, inventory, promotional information, retailer, product presentation picture or video, and product web page link of a to-be-purchased product.

According to another preferred embodiment of the present invention, the feedback product information in the information processing method includes one or more of the product's category, name, feature, brand, price, inventory, promotional information, retailer, product presentation picture or video and product web page link, and the product's historical deals or reviews.

According to another preferred embodiment of the present invention, the method of generating the product information in the information processing method comprises: generating the product information according to data uploaded by a product supplier; and/or crawling data on the Internet to generate the product information.

According to another aspect of the present invention, there is further provided an information processing system for a network transaction platform, the system comprising:
a product information database for storing product information;
personal consumption space for residing subscription information published by a user;
an information publishing module for publishing the subscription information in the personal consumption space;
an extracting module for extracting the subscription information from the personal consumption space;
a matching module for matching the subscription information to the product information; and
a feedback module for feeding back to the personal consumption space product information in the product information database whose matching degree to the subscription information reaches a certain predefined threshold.

According to one preferred embodiment of the present invention, the information processing system further comprises: a login module for receiving and verifying login data for the user to log in the personal consumption space.

According to one preferred embodiment of the present invention, the information processing system further comprises: personal information storage space for storing personal information uploaded by the user; the verification refers to match-verifying the login data with the personal information stored in the personal information storage space.

According to one preferred embodiment of the present invention, a method for verification in the information processing system comprises one or more of biological information recognition verification, information matching verification and identification recognition authentication.

According to another preferred embodiment of the present invention, the information processing system further comprises: an order generating module for generating an order according to the feedback product information.

According to another preferred embodiment of the present invention, the information processing system further comprises: an order handling module for receiving the order generated in the order generating module and handling the order or forwarding it to a third party.

According to another preferred embodiment of the present invention, the information processing system further comprises: an information editing module for editing the subscription information and/or matching information in the personal consumption space.

According to another preferred embodiment of the present invention, a matching method used by the matching module in the information processing system comprises: subjecting the subscription information to one or more of character matching, text matching, graphic matching, interpretation matching or fuzzy matching with the product information.

According to another preferred embodiment of the present invention, the edition processing performed by the information editing module in the information processing system comprises: modifying, forwarding or removing the subscription information; and/or bookmarking, forwarding or removing the matching information.

According to another preferred embodiment of the present invention, the information processing system further comprises: an information editing module for editing the subscription information and/or feedback product information in the personal consumption space.

According to another preferred embodiment of the present invention, a matching method used by the matching module in the information processing system comprises: subjecting the subscription information to character matching, text matching, graphic matching, interpretation matching or fuzzy matching with the product information.

According to another preferred embodiment of the present invention, the edition processing performed by the information editing module in the information processing system comprises: modifying, forwarding or removing the subscription information; and/or bookmarking, forwarding or removing the feedback product information.

According to another preferred embodiment of the present invention, the information publishing module, extracting module, matching module, feedback module, order generating module, order handling module, information editing module and product information module in the information processing system operate in real time or at regular time.

According to another preferred embodiment of the present invention, the subscription information in the information processing system is personal demand information, which includes one or more of: category, name, feature, brand, price, inventory, promotional information, retailer, product presentation picture or video, and product web page link of a to-be-purchased product.

According to another preferred embodiment of the present invention, the feedback product information in the information processing system includes one or more of the product's category, name, feature, brand, price, inventory, promotional information, retailer, product presentation picture or video and product web page link, and the product's historical deals or reviews.

According to another preferred embodiment of the present invention, the information processing system further comprises: a product information generating module for generating the product information and sending it to the product information database.

According to another preferred embodiment of the present invention, a method for generating the product information by the product information generating module in the information processing system comprises: generating the product information according to data uploaded by a product supplier; and/or crawling data on the Internet to generate the product information.

The network transaction system according to the present invention has the following advantages:

First of all, a user only needs to place subscription information in personal consumption space according to his/her own preference and actual demand, whereas concrete product information matching the subscription information is provided by a network transaction platform operator. The network transaction platform may use cloud technology and strong computing power at the server side to provide more rapid and more accurate matching result than disperse personal search, thereby achieving a fundamental shift from "people looking for goods" to "goods looking for people." The user only needs to select and/or confirm a product that meets his/her demand and that is fed back via the server of the transaction platform, which is more convenient than traditional methods of looking for a desired product in huge goods information.

In addition, a product supplier can directly obtain the user's demand data, i.e., subscription information, and the data or information directly reflects the user's purchase intention. By evaluating the user's purchase intention, the product supplier can make guidance analysis of the product's purchase and sale, inventory and other information, thereby further affect or guide the product manufacture upstream the supply chain.

### BRIEF DESCRIPTION OF THE SEVERAL VIEWS OF THE DRAWINGS

Other features, objects and advantages of the present invention will become more apparent from the following detailed description of non-limiting embodiments, when taken in conjunction with the accompanying drawings, wherein the same or similar reference generally refers to the same or similar components.
Fig. 1 is a schematic modular structural view of an information processing system for a network transaction platform according to one preferred embodiment of the present invention;
Fig. 2 is a schematic modular structural view of an information processing system for a network transaction platform according to another preferred embodiment of the present invention;
Fig. 3 is a flowchart of an information processing method according to one preferred embodiment of the present invention;
Fig. 4 is a flowchart of a flowchart of an information processing method that includes steps of generating and handling an order according to one preferred embodiment of the present invention; and
Figs. 5-9 are schematic views of instances of a user implementing the whole network transaction in an information processing system and method for a network transaction platform according to one preferred embodiment of the present invention.

### DETAILED DESCRIPTION

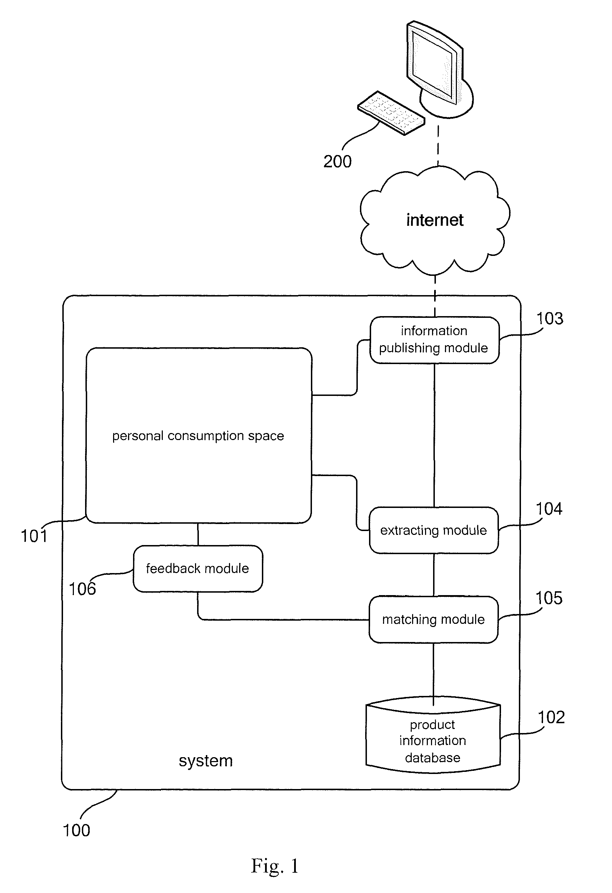

To better understand and set forth the present invention, further detailed description is presented below to the present invention with reference to Figs. 1-4.

Fig. 1 is a schematic modular structural view of an information processing system for a network transaction platform according to one preferred embodiment of the present invention. As shown in Fig. 1, system 100 comprises:
a product information database 102 for storing product information;
personal consumption space 101 for residing subscription information published by a user;
an information publishing module 103 for publishing the subscription information in personal consumption space 101;
an extracting module 104 for extracting the subscription information from personal consumption space 101;
a matching module 105 for matching the subscription information to the product information; and
a feedback module 106 for feeding back to personal consumption space 101 product information whose matching degree to the subscription information reaches a certain predefined threshold.

In particular, in this embodiment, system 100 is implemented as a network transaction platform 100. Typically, network transaction platform 100 is implemented as a B/S architecture or C/S architecture that can be easily used across platform, and preferably, is implemented as a B/S architecture. Various modules within network transaction platform 100 are designed and running based on the above architecture.

Product information database 102 that may be implemented using a well-known technique is used for storing product information that might comprise product-related attribute data and description data. Typically, product information database 102 is integrated in network transaction platform 100. In other embodiments, product information database 102 might be implemented as a distributed server system, server cluster or server logic matrix, which is formed by a plurality of network servers.

In this embodiment, personal consumption space 101 is integrated and resides on network transaction platform 100 (in this disclosure, the term "reside" refers to storing data and invoking data at any time). Subscription information is stored and resides in personal consumption space.

Information publishing module 103 publishes the subscription information and sends it to personal consumption space 101. As shown in Fig. 1, typically, the information publishing module provides for a terminal 200 an input interface for inputting detailed content of the subscription information. The input interface may be implemented as a browser running on terminal 200 or a computer data input interface on a client, and may receive a web page of inputted data for example. It should be pointed out that terminal 200 includes, without limitation, a personal computer terminal in this embodiment, a smartphone, a panel computer, a handheld intelligent terminal or other intelligent terminal.

More typically, the subscription information is personal demand information published by the user, which includes one or more of: category, name, feature, brand, price, inventory, promotional information, retailer, product presentation picture or video, and product web page link of a to-be-purchased product. Information publishing module 103 publishes in personal consumption space 101 one or more of the personal demand information in the form of a data table. Preferably, the user using the input interface of terminal 200 feeds back to information publishing module 103 input operation of checking or filling the personal demand information.

After the subscription information is stored and resides in personal consumption space 101, it may be set as private subscription information so that only an authorized user may invoke or modify the private subscription information; or the subscription information may be published to the public so that all or part of users on network transaction platform 100 may view the subscription information. In a preferred embodiment, the two methods may be used in conjunction.

Further, extracting module 104 is used for extracting the subscription information from personal consumption space 101. Typically, during background processing, extracting module 104 converts the subscription information to data identifiable by matching module 105 and sends the data to matching module 105.

Matching module 105 performs data interaction with product information database 106 for matching the subscription information to product information stored in product information database 106. Concrete implementations of the matching procedure include, without limitation, subjecting the subscription information to character matching, text matching, graphic matching, interpretation matching or fuzzy matching with the product information. Typically, matching module 105 at least may generate, according to the subscription information, one or more matching factors such as keyword, picture eigenvalue, phrase known interpretation attribute (e.g., synonym, etc.), etc, and accordingly, send a query matching request to product information database 106 to obtain a result based on the matching factor. The procedure as performing a match in product information database 106 according to the matching factor is a common database query technique in the art and thus is not detailed here for a simplicity purpose.

Feedback module 107 may perform data interaction with product information database 106 and personal consumption space 101 for feeding back to personal consumption space 101 product information in the product information stored in product information database 106, whose matching degree to the subscription information reaches a certain predefined threshold. Specifically, in real applications, since the product information has a large data amount, the purpose of defining the threshold is to select from the product information product information that is pertinent to the subscription information, i.e., product information being fed back is a subset of the product information. The product information is electronic data for describing attributes of a real product. Typically, the product information at least includes one or more of the product's category, name, feature, brand, price, inventory, promotional information, retailer, product presentation picture or video, product web page link, and historical deals or reviews.

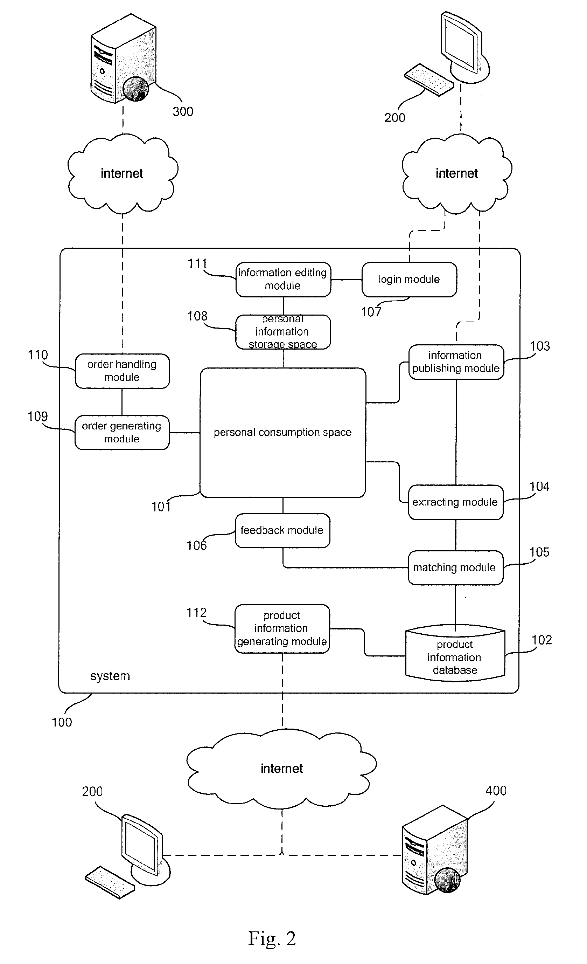

Further, refer to Fig. 2, which is a schematic modular structural view of an information processing system for a network transaction platform according to another preferred embodiment of the present invention and which essentially improves system 100 shown in Fig. 1 so as to meet more application demands. Various portions are now illustrated below, where the same modules as those in the schematic modular structural view of the information processing system shown in Fig. 1 are not detailed here.

Preferably, system 100 further comprises a login module 107 for receiving and verifying a user's login data for logging in personal consumption space 101. Like other typical system of B/S architecture, system 100 may be implemented as a user management mode based on registered users. After a user is registered in system 100 for the first time, when later accessing system 100 by using terminal 200, the user first at least sends login data that comprises a username and login password to the login module for verifying the user's identity. Optionally, after a user is registered in system 100 for the first time, he/she at least uploads personal information, such as his/her username and password, so as to be used in later login verification. System 100 optionally comprises personal information storage space 108 for storing the personal information. Accordingly, the verification performed in login module 107 refers to match-verifying the login data to personal information stored in the personal information storage space so as to confirm a user's identity and grant predefined usage right of system 100 accordingly. Of course, in view of different personal information, user login module 107 may automatically select an appropriate verification method, e.g., uploading one or more of biological information data, traditional username/password data and identification data. Accordingly, the verification method includes one or more of biological information recognition verification (e.g., fingerprint data verification), information matching verification (username/password check) and identification recognition verification (e.g., peripheral key authentication of portable computers). In a preferred embodiment, login module 107 is designed with the capability of multiple data verification.

Preferably, in consideration of providing more personalized services to users, personal information storage space 108 may contain, for example, common online community function modules such as personal homepage, personal material, personal log, personal photo album/video, social map and circle. In a preferred embodiment, personal information storage space 108 and personal consumption space 101 may be integrated together and share data so as to facilitate management.

Preferably, system 100 further comprises an order generating module 109 for generating an order according to the feedback product information; further, to perfect the function of handling electronic orders, system 100 further comprises an order handling module 110 for receiving the order generated in order generating module 109 and handling the order or forwarding the order to a third party. Specifically, the user may view the feedback product information (as described above, the feedback product information comprises product-related product data) stored in personal consumption space 101. Order generating module 109 provides a human-computer interaction interface so that the user may select desired goods data or goods data list from the feedback product information and trigger order generating module 109 to package the goods data or goods data list to form an electronic order, thereby performing operations like confirming goods subscription while forming the order. Typically, order generating module 109 provides a user-friendly order generating method like an online shopping cart and a corresponding human-computer interaction interface. After the order is generated, order handling module 110 receives the order generated by order generating module 109 and handles accordingly, for example, classification, refinement, shipment notification, etc.; or order handling module 110 directly forwards the order to a third-party electronic transaction platform or goods supplier corresponding to the goods data saved in the order, for example, sending the order to a third-party server 300 that provides follow-up service for the order so as to further handle the order, e.g., confirming transaction, opening payment entrance, shipment, etc.

In a preferred embodiment, the user desires the subscription information and the feedback product information to be editable so that actual demands of more application scenarios may be met. Thus, in this embodiment, system 100 further comprises an information editing module 111 for editing the subscription information and/or the feedback product information stored in personal consumption space 101. Specifically, the edition comprises: modifying, forwarding or removing the subscription information; and/or bookmarking, forwarding or removing the feedback product information. Further, information editing module 111 may also be implemented as a management module of global information in system 100, which performs interactive communication with other modules in system 100 so as to add, modify, remove and perform other editing operation on information data in various modules, for example, editing an order, publishing and removing a personal photo, publishing and modifying a personal log, etc.

Preferably, system 100 further comprises a product information generating module 113 for generating the product information and sending it to product information database 102. Typically, product information generating module 113 performs data interaction with product information database 102; that is, product information generating module 113 may continuously supplement product information database 102 with newly added product information to product information so as to perfect the data coverage amount of product information database 102 and thus provide users with fuller product matching services. Specifically, a method for generating the product information by product information generating module 113 comprises: generating the product information according to data uploaded by a product supplier, and/or crawling data on the Internet to generate the product information. For example, product information generating module 113 provides a data editing and uploading interface oriented to product suppliers so that a product supplier may use a computer device like computer 200 to edit various data related to products and upload them to product information database 102. For another example, product information generating module 113 may be implemented as a computer device running network crawl programs, which crawls and analyzes related data contained in web pages on other e-business transaction server 400 in the Internet so as to upload them to product information database 102.

Preferably, information publishing module 103, extracting module 104, matching module 105, feedback module 106, order generating module 109, order handling module 110, information editing module 111 and product information generating module 112 each operate in real time or at regular time. By properly arranging these modules to operate at regular time or in real time, it is possible to improve the processing efficiency of system 100 and reduce the system load when visits reach the peak.

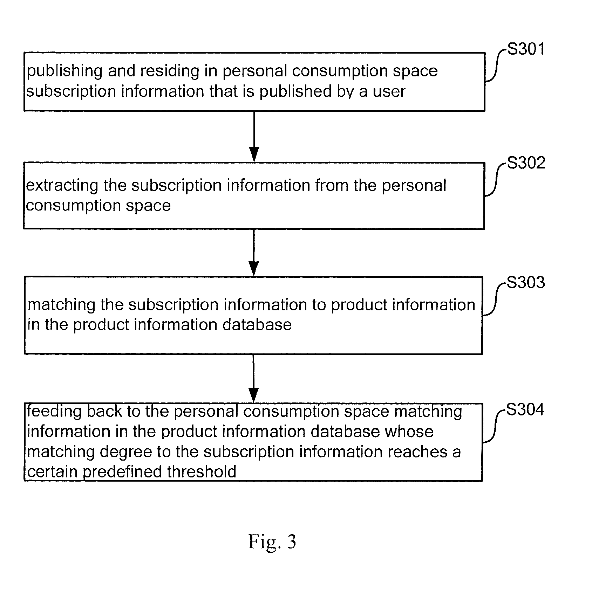

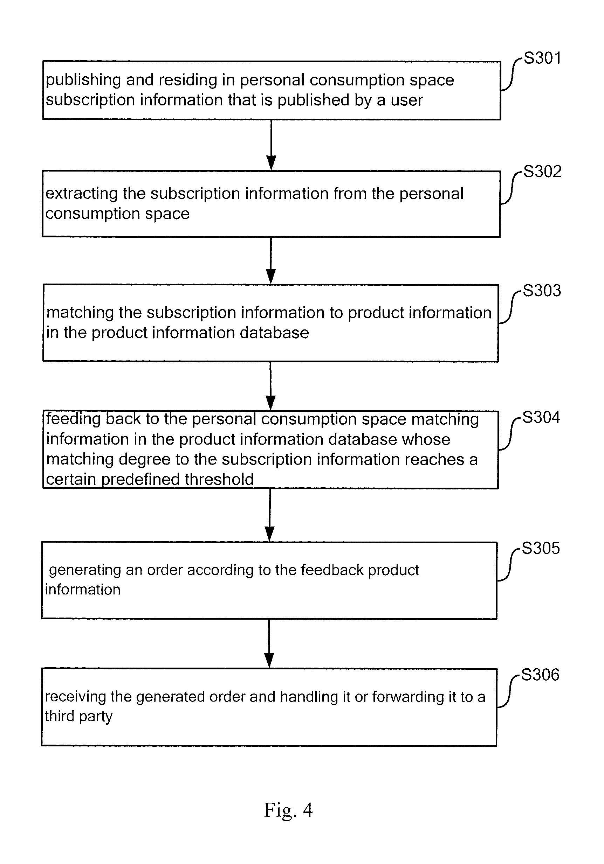

On the other hand, the method provided by the present invention is explained in conjunction with interpretations of relevant terms in the embodiments shown in Figs. 1 and 2. Refer to Figs. 3 and 4.

First refer to Fig. 3, which is a flowchart of the information processing method according to one preferred embodiment of the present invention. Preferably, the method may be implemented in conjunction with the structure of system 100 shown in Fig. 1 or 2. That is, in the information processing method for a network transaction platform, the network transaction platform is provided with a user's personal consumption space and has a product information database. The method comprises:
step S301 of residing in personal consumption space subscription information that is published by a user;
step S302 of extracting the subscription information from the personal consumption space;
step S303 of matching the subscription information to product information in a product information database; and
step S304 of feeding back to the personal consumption space product information in the product information database whose matching degree to the subscription information reaches a certain predefined threshold.

Specifically, the matching step comprises: subjecting the subscription information to character matching, text matching, graphic matching, interpretation matching or fuzzy matching with the product information. It should be pointed out that the subscription information is personal demand information, which includes one or more of: category, name, feature, brand, price, inventory, promotional information, retailer, product presentation picture or video, and product web page link of a to-be-purchased product. The feedback product information includes one or more of the product's category, name, feature, brand, price, inventory, promotional information, retailer, product presentation picture or video and product web page link, and the product's historical deals or reviews.

Refer to Fig. 4, which is a flowchart of the information processing method that includes steps of generating and handling an order according to one preferred embodiment of the present invention, wherein the same steps as those in the method shown in Fig. 3 are not detailed here and in this flow the method performs the following steps subsequent to step S304:
step S305 of generating an order according to the feedback product information; and
step S306 of receiving the generated order and handling it or forwarding it to a third party.

Preferably, the method further comprises the step of: editing the subscription information and/or the feedback product information in the personal consumption space. Specifically, this step comprises: modifying, forwarding or removing the subscription information; and/or bookmarking, forwarding or removing the feedback product information.

It should be pointed out that preferably, the method of generating the product information stored in the product information database comprises: generating the product information according to data uploaded by a product supplier; and/or crawling data on the Internet to generate the product information. The information publishing step, extracting step, matching step, feedback step, order generating step, order handling step, information editing step described in the method embodiment each operate in real time or at regular time. By properly arranging these steps to operate at regular time or in real time, it is possible to improve the processing efficiency of the method and reduce the system load of the network transaction platform when visits reach the peak.

The matching module about the matching processing and the matching step may use a character string matching technique. The character string matching technique is a mature and widely applied matching technique, and algorithms may be designed to implement the character string matching technique. In this embodiment, algorithms with better performance may be selected, such as the BM algorithm and QS algorithm. There are various approaches to matching besides the algorithm-based character string matching approach. Regarding the threshold of matching degree, it may be defined and modified by users or merchants according to actual needs, so long as it can better achieve information interaction. This fall within the protection scope and invention gist of the present invention. Of course, the algorithm enumerated here are merely exemplary, which are intended to deliver a clearer understanding of concrete forms of the matching rather than limiting the protection scope of the present invention.

To better understand the present invention, presented below is an implementation instance of an information processing system for a network transaction platform as claimed in the present invention, which is intended to deliver a better understanding of the claimed technical solution and gist of the present invention. The instance is described as below:

First of all, the present invention is described through the whole flow of a user using personal consumption space to implement a network transaction.

The user activates or opens his/her personal consumption space on a network transaction platform. A concrete implementation may, for example, set up an online personal store, wherein the online personal store has a virtual shelf structure, and the shelf is a carrier for to publish subscription information by the user and also a carrier to extract the subscription information. Based on the above explanation for the subscription information, displays of information of subscribed goods may be displayed on the shelf.

While the user subscribes to goods, after he/she completes confirming the subscription, goods related to the subscription information is placed on the shelf. Generally there are two kinds of subscribing methods: subscribing by search, i.e., subscribing according to a search result, which may achieve batch subscribing; direct subscribing, which may achieve one-to-one subscribing on the homepage of an object subscribed to. Of course, other subscribing approaches may also be used. Depending on different resources of consumers, various subscribing approaches may be selected or combined. In particular, the user may manage content contained in the shelf in a definable manner, for example, depositing goods the user has purchased or classifying goods that have been subscribed to and placed on the shelf according to the user's own shopping hobbies or usage of goods. While search-subscribing, the basis for search usually includes retailer, category, brand, item, activity and price range corresponding to goods.

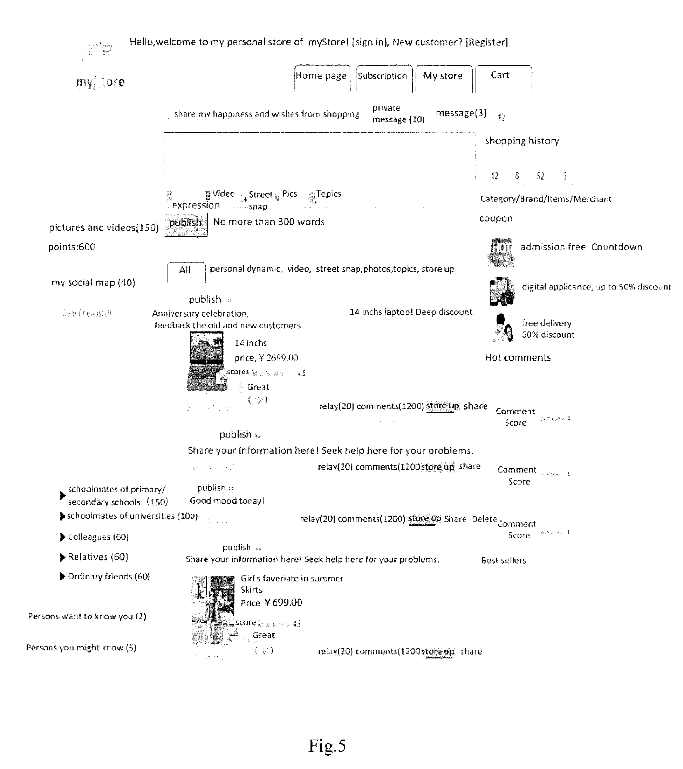

With reference to Figs. 5-9, description is presented below to two instances that a user implements subscription. Figs. 5-9 are schematic views of instances of the user implementing the whole network transaction in the information processing system and method for a network transaction platform according to one preferred embodiment of the present invention.

As shown, take an example that a user subscribes to a pair of sandals. Figs. 5-7 show the procedure where the user uses subscribes to goods through search. First of all, the user visits myStore (shown in Fig. 5). The system will inquire whether the user is a new user or not; if yes, the new user should be registered prior to logging in myStore. After logging in myStore, the interface is as shown in Fig. 5. Essentially the interface shown in Fig. 5 is a typical embodiment of the above personal consumption space.

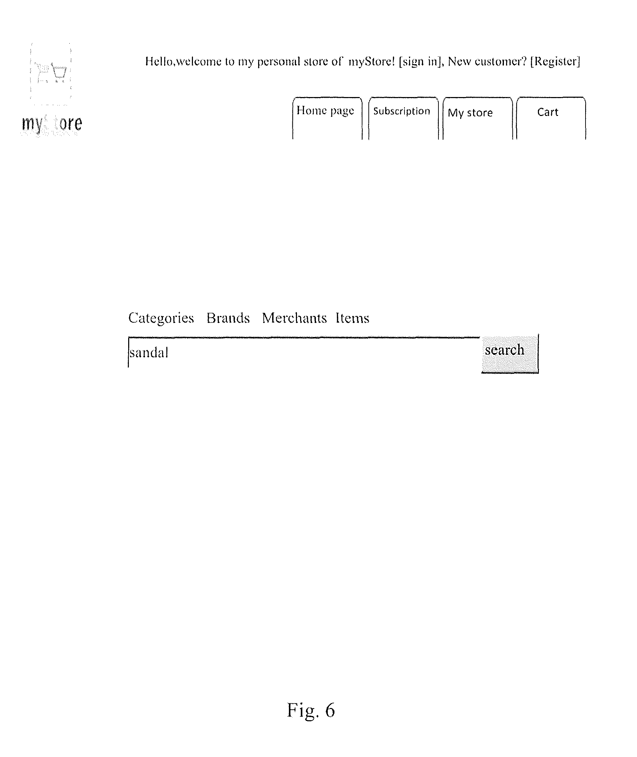

The interface provides a search function. The search interface is as shown in Fig. 6. The field "sandals" is inputted using the search engine of myStore.

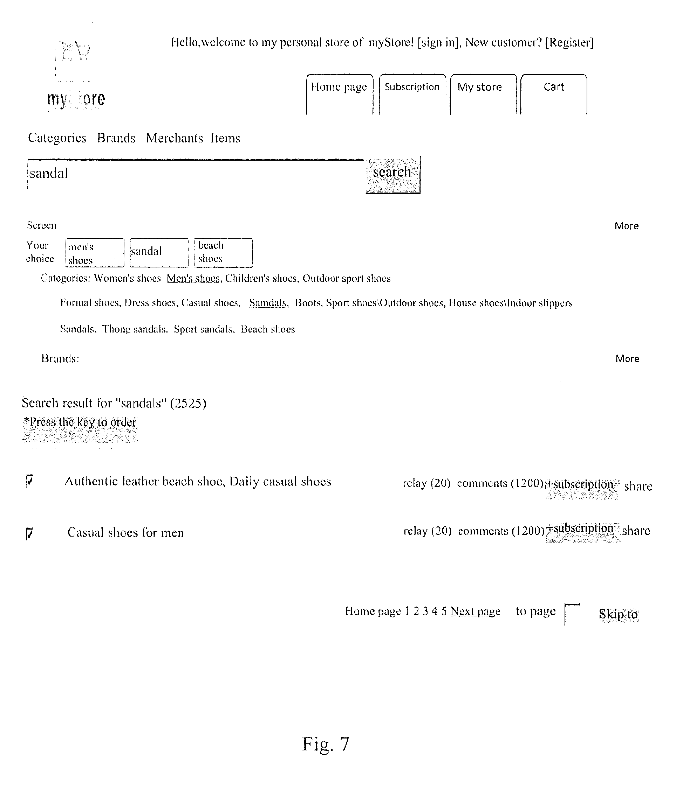

As shown in Fig. 7, this figure shows a schematic view of a result of the search. The interface shown in Fig. 7 contains a control for filtering goods, and types of shoes may be filtered based thereon. This figure shows a result from filtering goods under constraints of men's shoes-sandals-beach sandals, and the user may use the "subscribe" button to select goods from the result and complete subscription.

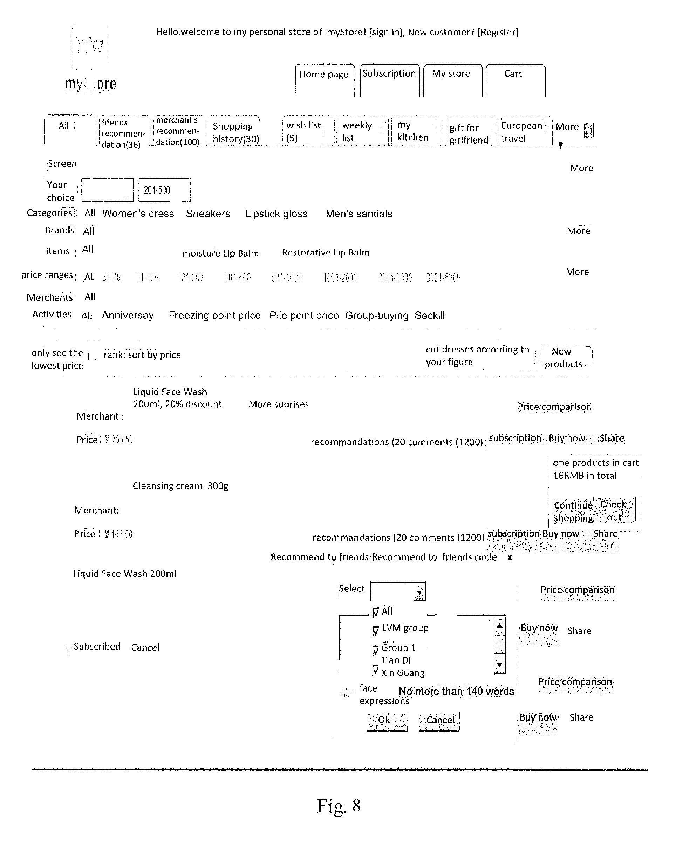

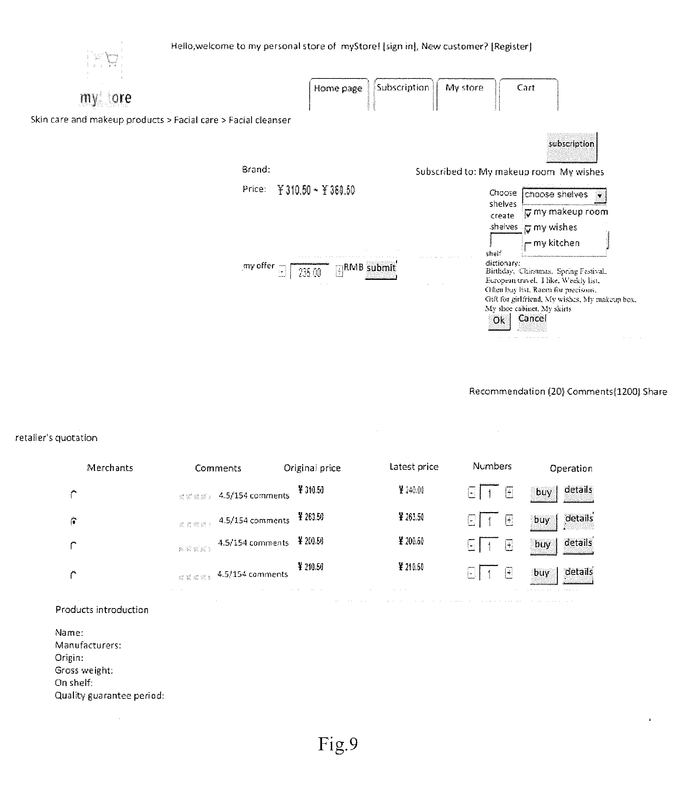

Figs. 8 and 9 show a concrete instance of direct subscribing. In Fig. 8, goods are filtered according to brand and price, and then a result is directly subscribed to the shelf by the "subscribe" button.

Later as shown in Fig. 9, subscription information is put in different types of shelves, and the user may select a type of shelves. As shown in Fig. 9, types of shelves are my dressing room, my wishes, my kitchen, etc. (which means that a corresponding structure of shelves may be selected for a different type of goods). In real application, the shelves may have a self-updating function of or have a selecting function, like the pull-down menu function as shown in this figure. After goods the user has subscribed to enter a shelf, a merchant or service provider may analyze subscription demands for goods on shelves and then send to the user information of a product meeting the user's demand, just as the quotation shown in Fig. 9, which contains reviews, original price, recent price and other information. Of course, the types and content of information as shown may be selected depending on the user's demands.

While a personal store is being implemented, it is implemented as a Graphical User Interface or web page on the network transaction platform. The instances shown in Figs. 5-9 are merely exemplary, which do not go into details and which are intended to describe the whole procedure that the user uses a personal store to implement a personal network transaction so as to better understand the present invention.

The information processing method for a network transaction platform as provided by the present invention may be implemented using programmable logic devices or implemented as computer program software. For example, the embodiments according to the present invention may be a computer program product, which is run to cause the computer to execute the method disclosed herein. The computer program product comprises a computer readable storage medium that contains computer program logic or code portion for implementing various steps of the information processing method for a network transaction platform. The computer readable storage medium may be a built-in medium installed within the computer or a removable medium (e.g., a hot plug technique storage device) detachable from the computer body. The built-in medium includes, without limitation, a rewritable non-volatile memory, e.g., RAM, ROM, a flash memory and a hard disk. The removable medium includes, without limitation, optical storage media (e.g., CD-ROM and DVD), magneto-optical storage media (e.g., MO), magnetic storage media (e.g., tapes or removable hard disks), media with a built-in rewritable non-volatile memory (e.g., storage cards), and media with built-in ROM (e.g., ROM boxes).

Those skilled in the art may appreciate that any computer system with appropriate programming means can execute various steps of the method of the present invention which is embodied in a program product. Although most embodiments described in this specification focus on software programs, substitute embodiments that implement the method provided by the present invention as firmware and hardware also fall within the protection scope of the present invention.

It is apparent to those skilled in the art that the present invention is not limited to details of the above illustrative embodiments, and they may implement the present invention in other forms without departing from the spirit or basic features of the present invention. Therefore, nevertheless, the embodiments should be regarded as illustrative rather than limiting. The scope of the present invention is not defined by the above illustration but by the appended claims. Therefore, it is intended to embrace in the present invention all alterations that fall within the meaning and scope of equivalent elements of the claims. Any reference numeral in the claims should not be construed as limiting a claim involved. In addition, the word "comprise/comprising" does not exclude other components, unit or steps, and the singular does not exclude the plural. A plurality of components, units or means as recited in claims may also be implemented as one component, unit or means by software or hardware.

The information processing system and method for a network transaction platform as disclosed in the present invention has such advantages that users operate conveniently and rapidly and that service providers provide feedback in time and accurately.

What has been disclosed above is merely some better embodiments of the present invention. The claim scope of the present invention should not be defined hereby. Equivalent changes made according to the claims of the present invention still belong to the scope of the present invention.

## Claims

1. An information processing method for a network transaction platform that is provided with personal consumption space of a user and that has a product information database, the method comprising:
an information publishing step of publishing and residing in personal consumption space subscription information that is published by a user;
an extracting step of extracting the subscription information from the personal consumption space;
a matching step of matching the subscription information to product information in the product information database; and
a feedback step of feeding back to the personal consumption space matching information in the product information database whose matching degree to the subscription information reaches a certain predefined threshold.

2. The method according to Claim 1, further comprising:
an order generating step of generating an order according to the matching information.

3. The method according to Claim 2, further comprising:
an order handling step of receiving the generated order and handling the order or forwarding it to a third party.

4. The method according to any one of Claims 1-3, further comprising:
an information editing step of editing the subscription information and/or matching information in the personal consumption space.

5. The method according to any one of Claims 1-4, wherein the matching step comprises:
subjecting the subscription information to one or more of character matching, text matching, graphic matching, interpretation matching or fuzzy matching with the product information.

6. The method according to Claim 4, wherein the information editing step comprises:
modifying, forwarding or removing the subscription information; and/or
bookmarking, forwarding or removing the matching information.

7. The method according to Claim 5, wherein
the information publishing step, extracting step, matching step, feedback step, order generating step, order handling step and information editing step are performed in real time or at regular time.

8. The method according to any one of Claims 1-7, wherein the subscription information in the information processing method is personal demand information, which includes one or more of:
category, name, feature, brand, price, inventory, promotional information, retailer, product presentation picture or video, and product web page link of a to-be-purchased product.

9. The method according to any one of Claims 1-7, wherein the feedback product information includes one or more of the product's category, name, feature, brand, price, inventory, promotional information, retailer, product presentation picture or video and product web page link, and the product's historical deals or reviews.

10. The method according to any one of Claims 1-7, wherein a method of generating the product information stored in the product information database comprises:
generating the product information according to data uploaded by a product supplier; and/or
crawling data on the Internet to generate the product information.

11. An information processing system for a network transaction platform, the system comprising:
a product information database for storing product information;
personal consumption space for residing subscription information published by a user;
an information publishing module for publishing the subscription information in the personal consumption space;
an extracting module for extracting the subscription information from the personal consumption space;
a matching module for matching the subscription information to the product information; and
a feedback module for feeding back to the personal consumption space product information in the product information database whose matching degree to the subscription information reaches a certain predefined threshold.

12. The system according to Claim 11, further comprising:
a login module for receiving and verifying login data for the user to log in the personal consumption space.

13. The system according to Claim 11 or 12, further comprising:
an order generating module for generating an order according to the feedback product information.

14. The system according to Claim 13, further comprising:
an order handling module for receiving the order generated in the order generating module and handling the order or forwarding it to a third party.

15. The system according to any one of Claims 11-14, further comprising:
an information editing module for editing the subscription information and/or feedback product information in the personal consumption space.

16. The system according to any one of Claims 11-15, further comprising:
a product information generating module for generating the product information and sending it to the product information database.

17. The system according to any one of Claims 11-16, further comprising:
personal information storage space for storing personal information uploaded by the user;
wherein the verification refers to match-verifying the login data with the personal information stored in the personal information storage space.

18. The system according to Claim 17, wherein
the information publishing module, extracting module, matching module, feedback module, order generating module, order handling module, information editing module and product information generating module operate in real time or at regular time.

19. The system according to Claim 17, wherein a method for verification comprises one or more of:
biological information recognition verification, information matching verification and identification recognition authentication.

20. The system according to any one of Claims 12-19, wherein a matching method used by the matching module comprises:
subjecting the subscription information to one or more of character matching, text matching, graphic matching, interpretation matching or fuzzy matching with the product information.

21. The system according to any one of Claims 15-19, wherein the edition processing performed by the information editing module comprises:
modifying, forwarding or removing the subscription information; and/or
bookmarking, forwarding or removing the feedback product information.

22. The system according to any one of Claims 11-21, wherein the subscription information is personal demand information, which includes one or more of:
category, name, feature, brand, price, inventory, promotional information, retailer, product presentation picture or video, and product web page link of a to-be-purchased product.

23. The system according to any one of Claims 11-22, wherein the feedback product information includes:
one or more of the product's category, name, feature, brand, price, inventory, promotional information, retailer, product presentation picture or video and product web page link, and the product's historical deals or reviews.

24. The system according to any one of Claims 16-22, wherein a method of generating the product information by the product information generating module comprises:
generating the product information according to data uploaded by a product supplier; and/or
crawling data on the Internet to generate the product information.
